Europäisches Patentamt

European Patent Office

Office européen des brevets

(19)

(11) Numéro de publication: **0 133 066**
**B1**

(12) **FASCICULE DE BREVET EUROPEEN**

(45) Date de publication du fascicule du brevet:
**01.06.88**

(21) Numéro de dépôt: **84401328.4**

(22) Date de dépôt: **25.06.84**

(51) Int. Cl.⁴: **B 64 G 1/58**

(54) **Ensemble composite formant écran de protection ou de dissipation thermique.**

(30) Priorité: **27.06.83 FR 8310560**

(43) Date de publication de la demande:
**13.02.85 Bulletin 85/7**

(45) Mention de la délivrance du brevet:
**01.06.88 Bulletin 88/22**

(84) Etats contractants désignés:
**DE GB SE**

(56) Documents cités:
**EP - A - 0 073 688**
**US - A - 3 395 035**
**US - A - 3 682 100**
**US - A - 3 793 861**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Le Touche, Roger André Louis, 5, rue du Beauregard, F-78920 Ecquevilly (FR)**

(74) Mandataire: **Santarelli, Marc, Cabinet Rinuy et Santarelli 14, avenue de la Grande Armée, F-75017 Paris (FR)**

## Description

La présente invention concerne un ensemble composite formant écran de protection ou de dissipation thermique.

Il est connu de la demande de brevet européen 82 401 298.3 du 9 juillet 1982 (EP-A-0 073 688) un écran de protection ou de dissipation thermique comprenant une paroi chaude et une paroi froide essentiellement caractérisé par le fait qu'il comprend entre la paroi chaude et la paroi froide un matériau souple du type nappe, mat, réseau de fibres servant de support ou d'armature à un matériau pulvérulent susceptible d'absorber et de retenir un liquide pour donner une pâte ou un gel à haut rendement thixotrope, cet élément dit «hydrateur-surchauffeur» en présence dudit liquide, évoluant de la fonction hydrateur vers la fonction surchauffeur selon le déroulement de l'agression thermique.

Un tel écran donne entière satisfaction dans le cas d'une température de protection donnée recherchée, cette température correspondant à la température de vaporisation du liquide inclus dans l'hydrateur-surchauffeur.

Or, il est des cas où il serait intéressant et fort utile d'avoir la possibilité non seulement de disposer d'une gamme plus étendue des températures de protection ou de stabilisation de la paroi à protéger, mais également de prolonger de façon notable la durée de protection.

La présente invention répond à ces besoins et fournit un moyen de protection capable, en face d'une agression thermique, de stabiliser la température à des niveaux différents et dégressifs en partant de la face chaude (zone affectée par l'agression thermique) vers la face froide délimitant la zone à protéger.

Ce moyen selon l'invention consiste en un ensemble composite fomant écran de protection ou de dissipation thermique comprenant une paroi chaude et une paroi froide et entre ladite paroi chaude et ladite paroi froide au moins deux éléments adjacents dits «vaporiseurs-surchauffeurs» en matériau souple, rigide ou rigidifié renfermant chacun en son sein une substance dite «réactive» capable de dégager à une température donnée propre à chaque élément un gaz ou une vapeur ininflammable chacun de ces éléments ayant une température de vaporisation donnée, ces températures allant en croissant de la face froide vers la face chaude, chaque élément étant séparé de l'autre par une paroi souple ou rigide étanche à la température de dégagement de vapeur ou de gaz de l'élément situé le plus près de ladite paroi chaude mais susceptible de devenir poreux dès que cette température est dépassée, chaque élément, par suite de la présence de ladite substance réactive, évoluant de la fonction «vaporiseur» vers la fonction «surchauffeur» selon le déroulement de l'agression thermique à laquelle il est soumis.

Suivant d'autres caractéristiques:

– Le matériau souple d'un élément dit «vaporiseur-surchauffeur» peut être du type nappe, mat, réseau de fibres servant de support à la substance susceptible de donner un gaz ou une vapeur à une température donnée.

– Le matériau rigide ou rigidifié d'un élément dit «vaporiseur-surchauffeur» peut être un matériau naturel ou synthétique pour servir de support mécanique, ou par absorption, adsorption, capillarité et autre phénomène à ladite substance donnant le gaz ou la vapeur à la température en cause.

– Comme exemple de tels matériaux, on peut citer: une composition colloïdale comme la silice colloïdale absorbant ou retenant un liquide pour donner une pâte ou un gel à haut rendement thixotrope; les fibres, toiles, tissus de fibres réfractaires telles que de roche, de céramique et analogues, tous polymères élastomères ou non, tels que de silicone, armés ou non de fibres, de toiles, ou de tissus réfractaires et analogues.

– La substance présente au sein de chaque élément dit «vaporiseur-surchauffeur» peut être une substance liquide ou solide vaporisable ou sublimable à une température donnée.

Le choix de la substance liquide ou solide vaporisable ou sublimable donnant des gaz ou des vapeurs ininflammables est fonction de la température de stabilisation recherchée et ce choix est à la portée de tout homme de l'art.

On peut citer à titre d'exemple, l'eau, les liquides ou solutions organiques ou minérales ininflammables, les solides minéraux ou organiques sublimables tels que notamment le carbonate d'ammonium et analogues.

– Le premier des éléments «vaporiseurs-surchauffeurs» est disposé en sandwich entre ladite paroi souple ou rigide étanche le séparant de l'élément «vaporiseur-surchauffeur» suivant immédiatement adjacent et un élément de revêtement constituant la face externe de l'écran terminé et le dernier de ces éléments «vaporiseurs-surchauffeurs» est disposé en sandwich entre la paroi souple ou rigide étanche le séparant de l'élément «vaporiseur-surchauffeur» immédiatement adjacent le précédant et un élément de revêtement en contact intime de la face froide de l'élément à protéger;

– Les éléments de revêtement sont constitués par des matériaux synthétiques, élastomères ou non, armés ou non de matériaux fibreux;

– L'élément constituant la face externe de l'écran terminé peut contenir un matériau donnant, avec le gaz ou la vapeur surchauffée provenant du vaporiseur-surchauffeur qui lui est immédiatement sous-jacent, une réaction endothermique.

Comme exemple d'un tel matériau, on peut citer le carbone donnant avec la vapeur d'eau une réaction endothermique.

D'autres caractéristiques et avantages de l'invention ressortiront plus clairement de la description qui va suivre faite en regard des dessins annexés sur lesquels:

– la figure 1 est une vue en coupe d'un écran de protection composite selon l'invention; et

– la figure 2 est une courbe illustrant les avantages résultant de l'application d'un écran selon l'invention.

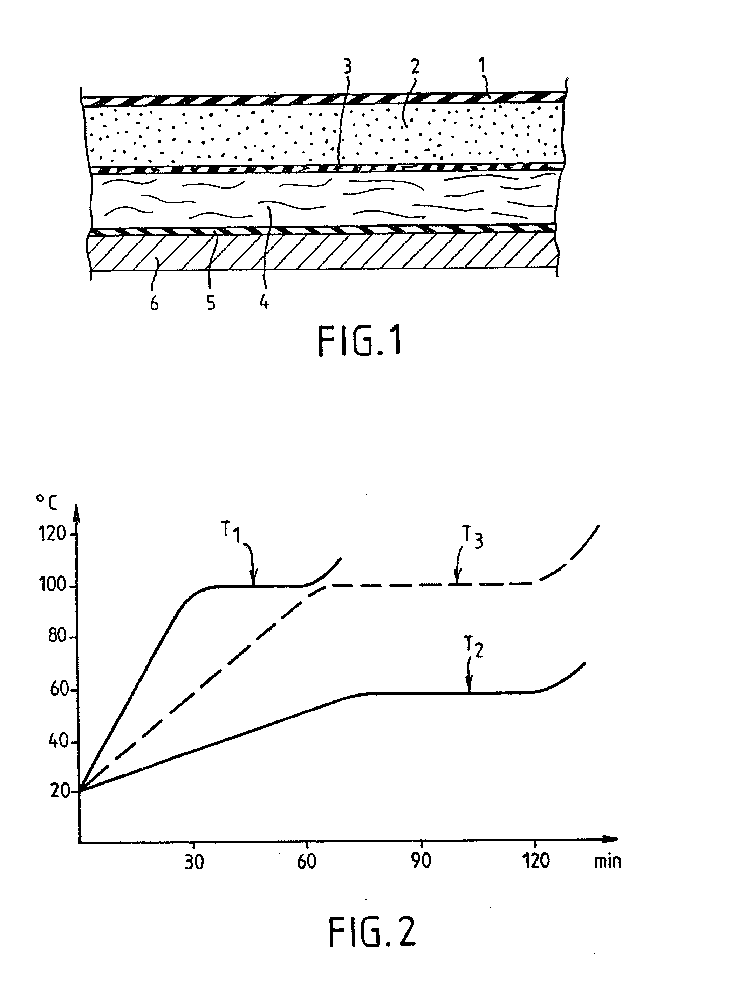

En se référant à la figure 1, on a représenté, en coupe et schématiquement, l'élément à protéger 6 sur lequel est appliquée par tout moyen connu en soi, tel que, par collage, enduction ou autre, une couche de revêtement 5. Cette couche de revêtement sert elle-même de support à un premier élément dit vaporiseur-surchauffeur 4 par exemple constitué par un matériau souple armé ou non ou rigidifié avantageusement fibreux du type nappe ou mat à base de fibres naturelles ou synthétiques, toiles, tissus de fibres réfractaires telles que de roche, de céramique et analogues, matériau contenant en son sein ou auquel se trouve incorporée une substance liquide, pâteuse ou solide dont la température de vaporisation ou de sublimation est fonction de la température à laquelle on désire que l'élément à protéger (6) soit maintenu.

Si cette température est par exemple de 60°C, on pourra avantageusement utiliser une composition à base de carbonate d'ammonium dont la température de décomposition rapide est voisine de 60°C, cette décomposition donnant du $CO_2$, de l'eau et du gaz ammoniac.

Cet élément vaporiseur-surchauffeur 4 est à son tour revêtu d'une couche de revêtement 3 de structure ou de constitution pouvant être identiques ou différentes de celles de la couche 5. Toutefois, ce revêtement 3 devra être étanche à la température de stabilisation obtenue par l'élément vaporiseur-surchauffeur 2 (décrit ci-après) qui lui est immédiatement adjacent conformément à l'invention, mais devra devenir poreux dès que cette température sera dépassée. Parmi les matériaux auxquels on pourra faire appel pour ce ou ces revêtements, on peut citer avantageusement tous polymères, élastomères ou non, armés ou non de fibres réfractaires sous forme de mat, de feutre ou de tissus d'un réfractaire, de quartz ou similaire. Dans le cas par exemple d'une température de stabilisation de 100°C désirée pour ce second vaporiseur-surchauffeur 2, on pourra utiliser un matériau à base de polyéthylène dit «basse température» ou analogue. Ce matériau est comme on le voit fonction de cette seconde température et devra satisfaire les deux conditions de caractéristiques et de comportement précisées ci-dessus.

Cette couche est appliquée par collage ou autrement par tout moyen approprié respectivement sur l'élément 4 et sur l'élément 2 décrit ci-après.

Ce dernier qui constitue le second vaporiseur-surchauffeur selon l'invention peut être constitué comme le premier élément vaporiseur-surchauffeur 4 mais il contiendra en son sein une substance ou une composition dont la température de vaporisation ou de sublimation est supérieure à celle présente dans ledit élément 4. C'est ainsi que l'on atteindra une température de stabilisation, par exemple de 100°C pour ce second élément vaporiseur-surchauffeur, en utilisant de l'eau admise directement sur le matériau constitutif de cet élément ou amenée, comme dans le cas de l'écran décrit dans la demande de brevet européen 82 401 298.3 rappelé ci-dessus, sous forme d'un gel ou d'une pâte à haut rendement thixotrope.

Ce second élément vaporiseur-surchauffeur 2 est lui-même revêtu d'une couche de revêtement 1 de structure ou de constitution pouvant être identiques ou différentes de celles des couches 5 et 3. Ce revêtement 1 constituera la face externe de l'écran terminé comme illustré à titre d'exemple sur la figure 1 ou bien constituera une paroi de séparation entre l'élément vaporiseur-surchauffeur 2 et un troisième élément, conformément à l'invention, de même type que les deux éléments 4 et 2 mais renfermant alors une substance dont la température de vaporisation ou de décomposition sera supérieure à celle présente dans l'élément vaporiseur-surchauffeur 2. Ce troisième élément sera à son tour revêtu d'une couche analogue à la couche 1. Comme on le voit le nombre d'éléments vaporiseurs-surchauffeurs peut être multiplié à volonté suivant le résultat recherché.

En prenant donc comme exemple l'écran à deux éléments vaporiseurs-surchauffeurs décrit et illustré ici, le phénomène auquel on assiste est le suivant en prenant le cas où l'élément vaporiseur-surchauffeur 2 est à base d'un gel aqueux de silice colloïdale et l'élément vaporiseur-surchauffeur 4 est à base de carbonate d'ammonium.

Lorsque la face externe 1 de l'écran est soumise à l'agression d'un flux thermique intense (température de 1100°C environ, l'essai étant effectué à la pression atmosphérique, ce flux thermique atteignant l'élément vaporiseur-surchauffeur 2 déclenche, d'une part, à la pression considérée, la vaporisation du liquide contenu au sein de cet élément (c'est-à-dire l'eau dans le cas de l'exemple choisi) et, d'autre part, la surchauffe de la vapeur ainsi produite qui évacue alors le maximum de calories à travers le revêtement 1 devenu poreux sous l'effet de ladite agression thermique, de ce fait l'évaporation s'effectue sans augmentation de la pression interne du matériau.

Ainsi, dans ce processus de vaporisation avec surchauffe, cette surchauffe produit une augmentation d'enthalpie qui est donnée par la différence entre la température stabilisée de la vapeur au niveau du revêtement 3 jouant dans un premier temps le rôle de paroi froide et la température maximale de ladite vapeur à sa sortie de l'écran thermique. De ce fait, on comprendra aisément que plus le flux d'agression thermique est important plus la quantité de calories évacuées par la matière active (vaporisable) sera importante. De plus, on réalise une stabilisation thermique efficace dans laquelle la température la plus basse ne dépasse pas la température de vaporisation de la substance vaporisable (ou sublimable) incluse dans le vaporiseur-surchauffeur 2 et ce pendant toute la durée de cette vaporisation (ou sublimation) soit, par exemple, 100°C pour l'eau à la pression atmosphérique de 1 bar et pendant une durée directement proportionelle à la quantité de cette eau incluse dans ledit vaporiseur-surchauffeur qui est alors hydrateur-surchauffeur quelle que soit l'agression thermique.

Une fois donc cette eau disparue, la température de la zone située au-dessus du revêtement 3 augmente considérablement et constitue une agression thermique pour ledit revêtement qui devient poreux pour atteindre l'élément vaporiseur-surchauffeur suivant, à savoir l'élément 4 dans le cas de l'exemple considéré ici. Cela déclenche, d'une part, par un phénomène analogue à celui décrit ci-dessus, la vaporisation ou la sublimation du composé actif présent dans cet élément 4 (ici la sublimation du carbonate d'ammonium) et, d'autre part, la surchauffe des vapeurs ou gaz produits qui évacuent alors à leur tour le maximum de calories à travers le revêtement 3 devenu poreux sous l'effet de ladite agression thermique. Le processus se poursuit comme dans le cas précédemment décrit pour l'élément 2.

Une nouvelle stabilisation thermique est réalisée par ce second processus, stabilisation dans laquelle la température la plus basse est celle de la décomposition du carbonate d'ammonium présent dans ledit élément vaporiseur-surchauffeur 4 soit de l'ordre de 60°C alors que l'agression du flux thermique initial est toujours de l'ordre de 1100°C et plus. L'élément à protéger 6 ne sera donc soumis qu'à une température de 60°C pendant toute la durée pendant laquelle du carbonate d'ammonium se trouve encore présent dans l'élément 4.

Un essai réalisé en laboratoire sur un écran de type ci-dessus (à deux éléments vaporiseurs-surchauffeurs) de 2 cm d'épaisseur (1 cm pour chaque élément) a donné les résultats illustrés par les courbes de la figure 2, lorsque cet écran a été exposé à une agression thermique de 1100°C.

Sur cette fig.: $T_1$ est la température mesurée sur la paroi d'étanchéité interne 3.

$T_2$ est la température mesurée sur la paroi froide 5.

Un essai analogue a également été effectué dans les mêmes conditions sur un écran de 2 cm à un seul élément hydrateur-surchauffeur conforme à la demande de brevet européen 82 401 298.3. On a abtenu la courbe $T_3$.

L'intérêt de l'invention apparaît alors nettement à l'homme de l'art du fait de la possibilité de stabilisation de la température à des niveaux différents et dégressifs par suite de la réalisation de plusieurs éléments vaporiseurs-surchauffeurs présentant chacun sa propre température de stabilisation.

Il en résulte les avantages suivants que ne procurent pas les écrans thermiques actuellement connus:

– Plus grand choix dans la température de stabilisation de la paroi à protéger;

– Prolongation notable de la durée de protection en base température grâce à l'addition de deux phénomènes physiques à savoir:

a) éviter la vaporisation rapide des produits ayant la plus basse température d'ébullition de décomposition ou de sublimation en ne les exposant qu'à une agression thermique atténuée (température stabilisée et connue).

b) surchauffeur au maximum les gaz ou vapeurs des produits ayant la plus basse température d'ébullition de décomposition ou de sublimation en les obligeant à traverser les différants éléments vaporiseurs-surchauffeurs les précédant et qui les séparent de la face chaude soumise à l'agression thermique la plus intense.

Comme dans le cas d'un écran réalisé selon la demande européenne 82 401 298.3 la dissipation des calories peut encore être augmentée en choisissant, pour les éléments de revêtements des vaporiseurs-surchauffeurs, des matériaux élastomères devenant nécessairement poreux aux températures élevées de l'agression thermique à laquelle ils sont soumis et, de plus, susceptibles de s'expanser facilitant ainsi cette dissipation.

De même, ces éléments de revêtement et d'étanchéité pourront comporter une substance à base de carbone qui, en présence de vapeurs d'eau, donne une réaction fortement endothermique entraînant de ce fait les calories à éliminer.

Procurant ainsi la possibilité d'une stabilisation thermique à des températures relativement basses, fonction de la nature de la substance incluse dans le dernier élément vaporiseur-surchauffeur au contact intime de la paroi à protéger, l'invention trouve des applications telles que:

– Protection contre l'incendie des mémoires bandes magnétiques;

– Protection des matériels électroniques sensibles; et d'une manière générale,

– Protection de tout produit ou matériel susceptible d'être détérioré par des températures supérieures aux températures de l'ordre de 30 à 60°C.

**Revendications**

1. Ensemble composite formant écran de protection ou de dissipation thermique comprenant une paroi chaude (1) et une paroi froide (6) et entre ladite paroi chaude (1) et ladite paroi froide (6), au moins deux éléments adjacents dits «vaporiseurs-surchauffeurs» (2–4) en matériau souple, rigide ou rigidifié renfermant chacun en son sein une substance dite «réactive» capable de dégager à une température donnée, propre à chaque élément, un gaz ou une vapeur ininflammable, chacun de ces éléments (2–4) ayant une température de vaporisation donnée ces températures, allant en croissant de la face froide vers la face chaude, chaque élément étant séparé de l'autre par une paroi souple ou rigide (3) étanche à la température de dégagement de vapeur ou de gaz de l'élément situé le plus près de ladite paroi chaude mais susceptible de devenir poreux dès que cette température est dépassée, chaque élément (2–4) par suite de la présence de ladite substance réactive, évoluant de la fonction «vaporiseur» vers la fonction «surchauffeur» selon le déroulement de l'agression thermique à laquelle il est soumis.

2. Ensemble composite selon la revendication 1, caractérisé par le fait que le matériau souple d'un élément vaporiseur-surchauffeur (2–4) peut être du type nappe, mat, réseau de fibres servant de support à la substance susceptible de donner un gaz ou une vapeur à une température donnée.

3. Ensemble composite selon la revendication 1, caractérisé par le fait que le matériau rigide ou rigidifié d'un élément vaporiseur-surchauffeur peut être un matériau naturel ou synthétique pour servir de support mécanique ou par absorption, adsorption, capillarité et autre phénomène à ladite substance donnant le gaz ou la vapeur à la température en cause.

4. Ensemble composite selon l'une quelconque des revendications 1 à 3, caractérisé par le fait que le matériau entrant dans la composition d'un élément vaporiseur-surchauffeur peut être une composition colloïdale absorbant ou retenant un liquide pour donner une pâte ou un gel à haut rendement thixotrope; les fibres, toiles, tissus de fibres réfractaires telles que roche, de céramique et analogues; tous polymères élastomères ou non, tels que de silicone, armés ou non de fibres, de toiles ou de tissus réfractaires et analogues.

5. Ensemble composite selon l'une quelconque des revendications 1 à 4, caractérisé par le fait que la substance présente au sein de chaque élément vaporiseur-surchauffeur (2–4) peut être une substance liquide ou solide vaporisable ou sublimable à une température donnée.

6. Ensemble composite selon la revendication 1, caractérisé par le fait que ladite substance peut être choisie parmi l'eau, les liquides ou solutions organiques ou minérales ininflammables, les solides minéraux ou organiques sublimables tels que notamment le carbonate d'ammonium et analogues.

7. Ensemble composite selon l'une quelconque des revendications 1 à 6, caractérisé par le fait que le premier des éléments vaporiseurs-surchauffeurs (2) est disposé en sandwich entre ladite paroi souple ou rigide, étanche (3) le séparant de l'élément vaporiseur-surchauffeur (4) suivant immédiatement adjacent et un élément de revêtement (1) constituant la face externe de l'écran terminé et le dernier de ces éléments vaporiseurs-surchauffeurs (4) est disposé en sandwich entre la paroi souple ou rigide étanche (3) le séparant de l'élément vaporiseur-surchauffeur (2) immédiatement adjacent le précédant et un élément de revêtement (5) au contact intime de la face froide de l'élément à protéger (6).

8. Elément composite selon la revendication 7, caractérisé par le fait que les éléments de revêtement sont constitués par des matériaux synthétiques élastomères ou non, armés ou non de matériaux fibreux.

9. Elément composite selon la revendication 7, caractérisé par le fait que l'élément (1) constituant la face externe de l'écran terminé peut contenir un matériau donnant, avec le gaz ou la vapeur surchauffée provenant du vaporiseur-surchauffeur qui lui est immédiatement sous-jacent, une réaction endothermique.

10. Elément composite selon la revendication 9, caractérisé en ce que ledit matériau donnant une réaction endothermique est le carbone.

**Patentansprüche**

1. Geschichteter Plattenaufbau als Schutzoder Wärmeableitschirm, mit einer warmen Wand (1) und einer kalten Wand (6) und mit mindestens zwei aneinanderliegenden Elementen (2–4), «Verdampfer-Überhitzer-Elemente» genannt, zwischen der warmen Wand (1) und der kalten Wand (6), welche Elemente aus nachgiebigem, steifem oder versteiftem Material bestehen und in ihrem Innern eine «reaktiv» genannte Substanz enthalten, die geeignet ist, bei einer gegebenen Temperatur, spezifisch für jedes Element, ein Gas oder einen nicht brennbaren Dampf freizusetzen, wobei jedes der Elemente (2–4) eine vorgegebene Verdampfungstemperatur aufweist, die von der kalten Seite zur warmen Seite zunimmt, und jedes Element von dem anderen durch eine nachgiebige oder steife Wand (3) getrennt ist, die bei der Abgabetemperatur des Dampfes oder des Gases des der warmen Wand am nächsten liegenden Elementes dicht ist, die jedoch porös werden kann, sobald diese Temperatur überschritten wird, und jedes Element (2–4) infolge der Anwesenheit der reaktiven Substanz sich von der Funktion «Verdampfer» in Richtung auf die Funktion «Überhitzer» verändert, gemäss dem Ablauf der thermischen Belastung, der es ausgesetzt ist.

2. Plattenaufbau nach Anspruch 1, dadurch gekennzeichnet, dass das nachgiebige Material eines Verdampfer-Überhitzer-Elementes (2–4) aus einem Vlies einer Matte oder einem Fasernetz bestehen kann, das als Träger für die Substanz dient, die geeignet ist, ein Gas oder einen Dampf bei einer bestimmten Temperatur abzugeben.

3. Plattenaufbau nach Anspruch 1, dadurch gekennzeichnet, dass das steife oder versteifte Material eines Verdampfer-Überhitzer-Elementes ein natürliches oder künstliches Material sein kann, um als mechanischer Träger oder durch Absorption, Adsorption, Kapillarität oder ein anderes Phänomen der Substanz zu dienen, die das Gas oder den Dampf bei der betreffenden Temperatur liefert.

4. Plattenaufbau nach einem der Ansprüche 1 bis 3, dadurch gekennzeichnet, dass die für die Zusammensetzung eines Verdampfer-Überhitzer-Elementes verwendbaren Materialien folgendes sein können: eine kolloidale Zusammensetzung, die eine Flüssigkeit absorbieren oder zurückhalten kann, um einen Teig oder ein Gel mit hoher thixotroper Wirkung liefern zu können, Fasern, Leinentuch, feuerfeste Fasern, wie beispielsweise Mineralfasern, keramische Fasern oder dgl., alle polymeren Elastomere oder nichtpolymere Elastomere, wie beispielsweise Silikon, faserverstärkt oder nicht, Tücher oder feuerfeste Gewebe oder dergleichen.

5. Plattenaufbau nach einem der Ansprüche 1 bis 4, dadurch gekennzeichnet, dass die im Innern eines jeden Verdampfer-Überhitzer-Elementes (2–4) vorhandene Substanz eine flüssige oder feste Substanz sein kann, die bei einer gegebenen Temperatur verdampfbar oder sublimierbar sein kann.

6. Plattenaufbau nach Anspruch 1, dadurch gekennzeichnet, dass die Substanz aus folgenden Materialien ausgewählt sein kann: Wasser, Flüssigkeiten oder organische oder mineralische nicht brennbare Lösungen, mineralische oder organische sublimierbare Feststoffe, wie insbesondere Ammoniumkarbonat oder dergleichen.

7. Plattenaufbau nach einem der Ansprüche 1 bis 6, dadurch gekennzeichnet, dass das erste der Verdampfer-Überhitzer-Elemente (2) in Sandwichbauweise zwischen der nachgiebigen oder steifen, dichten Wand (3), die dieses vom unmittelbar anschliessenden folgenden Verdampfer-Überhitzer-Element (4) trennt, und einem Überzugselement (1) angeordnet ist, das die Aussenseite des fertigen Schirms darstellt, und dass das letzte der Verdampfer-Überhitzer-Elemente (4) in Sandwichbauweise zwischen der nachgiebigen oder steifen, dichten Wand (3), die dieses von dem unmittelbar anschliessenden diesem vorausgehenden Verdampfer-Überhitzer-Element (2) trennt, und einem Überzugselement (5) angeordnet ist, das in innigem Kontakt mit der kalten Seite des zu schützenden Elementes (6) steht.

8. Plattenaufbau nach Anspruch 7, dadurch gekennzeichnet, dass die Überzugselemente aus synthetischen elastomeren Materialien oder nicht synthetischen, nichtelastomeren Materialien, aus mit Fasermaterial armierten Materialien oder nicht-armierten Materialien bestehen.

9. Plattenaufbau nach Anspruch 7, dadurch gekennzeichnet, dass das die Aussenseite des fertigen Schirmes darstellende Element (1) ein Material enthalten kann, das mit dem Gas oder dem überhitzten Dampf, der aus dem Verdampfer-Überhitzer kommt, dem es unmittelbar ausgesetzt ist, eine endotherme Reaktion auslöst.

10. Plattenaufbau nach Anspruch 9, dadurch gekennzeichnet, dass das die endotherme Reaktion auslösende Material Kohlenstoff ist.

**Claims**

1. A composite assembly forming a screen for thermal protection or heat dissipation comprising a hot wall (1) and a cold wall (6) and between the said hot wall (1) and the said cold wall (6) at least two adjacent elements called «vaporizer-superheaters» (2–4) made of flexible, rigid or stiffened material, each enclosing in its centre a substance, called «reactive», capable of releasing at a suitable given temperature for each element, a gas or a non-inflammable vapour, each of these elements (2–4) having a given temperature of vaporization, these temperatures increasing from the cold face towards the hot face, each element being separated from the other by a flexible or rigid wall (3), sealed at the temperature of release of vapour or gas of the element situated nearest to the said hot wall, but able to become porous when this temperature is exceeded, each element (2–4) as a result of the presence of the said reactive substance, changing from the «vaporizer» function towards the «superheater» function according to the development of the thermal aggression to which it is submitted.

2. A composite assembly according to Claim 1, characterized in that the flexible material of a so-called «vaporizer-superheater» element (2–4) can be in the form of a sheet, mat or network of fibres, supporting the substance able to form a gas or a vapour at a given temperature.

3. A composite assembly according to Claim 1, characterized in that the rigid or stiffened material of a so-called «vaporizer-superheater» element can be a natural or synthetic material providing mechanical support or support by absorption, adsorption, capillarity or other means for the said substance forming the gas or the vapour at the temperature concerned.

4. A composite assembly according to any one of Claims 1 to 3, characterized in that the material involved in the composition of a vaporizer-superheater element can be a colloidal composition absorbing or retaining a liquid to give a very thixotropic paste or gel; fibres, cloths, fabrics of refractory fibres such as those of rock, ceramics and the like; all polymers elastomeric or not, such as silicone, reinforced or not with fibres, cloths or refractory fabrics and the like.

5. A composite assembly according to any one of Claims 1 to 4, characterized in that the substance present in the centre of each vaporizer-superheater element (2–4) can be a liquid or a solid which can vaporize or sublime at a given temperature.

6. A composite assembly according to Claim 1, characterized in that the said substance can be chosen from water, non-inflammable organic or inorganic liquids or solutions, and sublimable inorganic or organic solids such as, especially, ammonium carbonate and the like.

7. A composite assembly according to any one of Claims 1 to 6, characterized in that the first of the vaporizer-superheater elements (2) is sandwiched between the said flexible or rigid sealing wall (3) separating it from the immediately adjacent succeeding vaporizer-superheater element (4) and a covering element (1) constituting the external face of the final screen, and the latter of these vaporizer-superheater elements (4) is sandwiched between the flexible or rigid sealing wall (3) separating it from the immediately adjacent preceding vaporizer-superheater element (2) and a covering element (5) in intimate contact with the cold face of the element (6) to be protected.

8. A composite assembly according to Claim 7, characterized in that the covering elements consist of synthetic materials, elastomers or not, reinforced or not by fibrous material.

9. A composite assembly according to Claim 7, characterized in that the element (1) constituting the external face of the final screen may contain a material reacting endothermically with the superheated gas or vapour coming from the vaporizer-superheater which is immediately adjacent below it.

10. A composite assembly according to Claim 7, characterized in that the said material reacting endothermically is carbon.

FIG.1

FIG.2